# EUROPEAN PATENT APPLICATION

(11) **EP 3 293 892 A1**
(43) Date of publication of application: **14.03.2018**
(21) Application number: 15889968.2
(22) Date of filing: 27.04.2015
(51) Int. Cl.: H04B 7/26, H04L 1/18

(54) **HARQ PROCESSING METHOD IN RESPONSE TO UPLINK TRANSMISSION IN DISTRIBUTION-TYPE WIRELESS BASE STATION**

(30) Priority: 24.04.2015 KR 20150057857
(71) Applicant: Cmaxwireless.Co. Ltd., Daegu 702-832 (KR)
(72) Inventor: CHAE, Young-Su, Daegu 706-968 (KR); SUNG, Min-Ho, Yongin-si Gyeonggi-do 448-534 (KR); CHAE, Dong-Hoon, Suwon-si Gyeonggi-do 442-828 (KR)
(74) Representative: Taor, Simon Edward William
(86) International application number: PCT/KR2015/004189
(87) International publication number: WO 2016/171302

(57) **Abstract**

The present invention provides a method of HARQ processing for uplink transmission in a distributed radio base station including at least one base unit (BU) configured to process digital signals and one or more radio units (RUs) installed in one or more target service areas and configured to wirelessly communicate with one or more pieces of user equipment (UEs), wherein the BU is coupled to each cell group over a transport network, the method including: a first step of forming, by the BU, radio unit groups by grouping the RUs for the individual pieces of UE; a second step of selecting, by the BU, any one of RUs, belonging a radio unit group for each of the pieces of UE, as an HARQ manager; and a third step of transmitting, by the BU, an HARQ response to the UE via the RU, which is the selected HARQ manager.

## Description

### Technical Field

The present invention relates to a method of HARQ processing for uplink transmission in a distributed radio base station, and more specifically to a method of efficient HARQ processing for uplink data, transmitted by user equipment (UE), in a distributed radio base station which is constructed by distributing one or more base units and radio units, wherein the radio units are organized into a plurality of groups, and one or more cell groups each including a set of the groups are formed, thereby enabling data to be more efficiently transmitted and received.

### Background Art

With the development of radio communication and network technologies, technologies for constructing a radio base station in a distributed form have been recently proposed.

The technologies for constructing a radio base station in a distributed form are based on a scheme in which a digital unit (DU) configured to process digital signals and a radio unit (RU) disposed at a remote location are separated from each other, the DU is installed in a data center and the RU is installed in a remote target service area, the DU and the RU are connected to each other, and then data is transmitted and received.

Korean Patent Application Publication No. 10-2013-0051873 relates to "a radio base station and a data processing method therefor," and discloses a radio base station including: a group digital unit (group DU) configured to include a plurality of digital units (DUs); and a plurality of Remote Radio Frequency Units (RRUs) connected to the group DU over a transport network and installed in respective target service areas; wherein each of the DUs includes a MAC function unit configured to perform a transmission/reception Medium Access Control (MAC) function, and each of the RRUs includes an encoder configured to encode downlink data received from each of the DUs. According to this technology, a plurality of DUs is grouped, a radio unit (RU) is connected by an optical cable over a transport network, and then data is processed, thereby providing an effect of reducing the amount of data that is transmitted and received.

However, the transport network is constructed using an optical cable and a coaxial cable via separate switching units, and thus this technology has limitations in that a system cannot be constructed using existing commercial IP network equipment or Ethernet network equipment at low cost and in that flexible multi-layer RU grouping and efficient interworking among a plurality of DUs and multi-layer RU groups cannot be performed using the multicasting/broadcasting function of an IP network or an Ethernet network.

Meanwhile, in order to overcome the limitations of the above technology, the present applicant filed patent applications for technology regarding a "distributed radio base station" via Korean Patent Application Nos. 10-2014-0096526 and 10-2014-0096532. This distributed radio base station is technology which is configured to construct a radio base station by distributing one or more base units and radio units, wherein the radio units are organized into a plurality of groups, and one or more cell groups each including a set of the groups are formed, thereby enabling data to be more efficiently transmitted and received. For this purpose, the distributed radio base station includes one or more base units (BUs) configured to process digital signals, and one or more radio units (RUs) installed in one or more target service areas and configured to wirelessly communicate with one or more pieces of user equipment (UEs). In this case, the BUs are configured to be coupled to respective cell groups, each including a set of radio unit groups into each of which one or more RUs are grouped, over a transport network, and the corresponding Bus are disposed in the respective cell groups. Accordingly, RUs and Bus can be efficiently distributed and managed based on physical spaces or user terminals in target service areas.

Meanwhile, in an LTE system, hybrid automatic repeat request (HARQ) is used in order to ensure transmission reliability and efficiency. HARQ may be classified into uplink HARQ and downlink HARQ. Downlink HARQ refers to a scheme in which when a base station transmits downlink data, user equipment (UE) transmits an ACK/NACK signal for the downlink data. Uplink HARQ refers to a scheme in which when UE transmits uplink data to a base station, the base station transmits an ACK/NACK signal for the uplink data.

However, in the above-described technologies, in order to process an HARQ response for the uplink data of UE received by one or more RUs (or RRUs), each of the RUs (or RRUs) needs to transfer the received uplink data to a base unit (BU) (or DU), and the BU (or DU) needs to analyze the uplink data of the UE transferred by the one or more RUs (or RRUs), to determine an HARQ response to the uplink data to be Ack or Nack, and to, in turn, transmit the HARQ response to the UE via the RUs (or RRHs).

During this process, the RUs and the BU are configured to be distributed, and thus there occurs transmission delay required for the RUs (or RRUs) to transmit the received uplink data to the BU (DU) and for the BU (or DU) to, in turn, transmit the determined HARQ response to the RUs (or RRUs).

However, the LTE standard adopts a synchronous HARQ scheme in which an HARQ response to uplink data received in subframe SF n must be transferred to UE in subframe SF N+k, and k=4 in the case of FDD and 4<=k<=13 depending on the UL-DL configuration in the case of TDD.

As a result, in the distributed base station including the BS (or DU) and the RUs (or RRUs), there may occur a situation in which the synchronous uplink HARQ response delay k stipulated in the LTE standard cannot be met depending on the state of the installation of the BS and the RUs. Accordingly, a problem arises in that HARQ service for uplink transmission cannot operate appropriately in the above situation.

### [Prior Art Documents]

Korean Patent Application Publication No. 10-2013-0051873 (published on May 21, 2013)
Korean Patent Application No. 10-2014-0096526 (filed on July 29, 2014)
Korean Patent Application No. 10-2014-0096532 (filed on July 29, 2014)

### Disclosure

### Technical Problem

The present invention is intended to overcome the above-described problems, and an object of the present invention is to provide a method of efficient HARQ processing for uplink data in a distributed radio base station in which a BU and RUs are separately constructed.

### Technical Solution

In order to accomplish the above object, the present invention provides a method of HARQ processing for uplink transmission in a distributed radio base station, the distributed radio base station including at least one base unit (BU) configured to process digital signals and one or more radio units (RUs) installed in one or more target service areas and configured to wirelessly communicate with one or more pieces of user equipment (UEs), the BU being coupled to each cell group, including a set of radio unit groups into each of which one or more RUs are grouped, over a transport network, the method including: a first step of forming, by the BU, radio unit groups by grouping the RUs for the individual pieces of UE; a second step of selecting, by the BU, any one of RUs, belonging a radio unit group for each of the pieces of UE, as an HARQ manager; and a third step of transmitting, by the BU, an HARQ response to the UE via the RU, which is the selected HARQ manager.

In this case, the first step may include, when RUs have received the RA preamble from the UE during a random access process and have transmitted RA preambles to the BU, organizing, by the BU, the RUs having received a random access (RA) preamble from the UE into a radio unit group for the corresponding UE.

Furthermore, the second step may include selecting, by the BU, the HARQ manager based on the reception information of the RA preambles received from the respective RUs within the radio unit group.

Furthermore, the method may further include, after the second step, a step of transmitting, by the BU, a random access response message for the random access of the UE to the HARQ manager, and transmitting, by the HARQ manager, the random access response message to the UE.

Furthermore, the method may further include; a step of transmitting, by the UE, uplink data to the RUs based on uplink resource allocation included in the received random access response message, and transmitting, by the RUs, the uplink data and uplink data reception information to the BU.

Furthermore, the BU may be configured to select a new HARQ manager based on the received uplink data reception information.

Furthermore, when there is no RU for which an uplink data CRC included in the uplink data reception information is normal and the received signal strength of an RU having the highest uplink received signal strength is higher than a received signal strength from the existing HARQ manager by a predetermined or larger value, the BU may select the corresponding RU as the new HARQ manager.

Furthermore, when there are RUs for each of which an uplink data CRC included in the uplink data reception information is normal and an uplink data CRC from the existing HARQ manager is not normal, an RU having the highest uplink received signal strength may be selected as the new HARQ manager from among the RUs for each of which an uplink data CRC is normal.

Furthermore, when there are RUs for each of which an uplink data CRC included in the uplink data reception information is normal, an uplink data CRC from the existing HARQ manager is normal, and the uplink received signal strength of an RU having the highest uplink received signal strength of all the RUs for each of which an uplink data CRC is normal is higher than the uplink received signal strength from the existing HARQ manager by a predetermined or larger value, the corresponding RU may be selected as the new HARQ manager.

Furthermore, the third step may include transmitting, by the RUs, an uplink data, received in subframe SF n, to the BU, transmitting, by the BU, an HARQ response corresponding to the uplink data to the HARQ manager, and transmitting, by the HARQ manager, the HARQ response to the UE in subframe SF n+k.

Furthermore, the BU may be configured to transmit an HARQ Ack response signal to the HARQ manager when receiving uplink data for which a CRC is normal from at least one RU of the radio unit group, and to transmit an HARQ Nack response signal to the HARQ manager when receiving uplink data for which a CRC is abnormal from all the RUs of the radio unit group.

Furthermore, the third step may includes, when it is determined that it is impossible for the BU to transmit an HARQ response to uplink data, received in subframe SF n by the RUs, to the UE via the HARQ manager in subframe SF n+k, transmitting, by the HARQ manager, an HARQ Ack response signal to the UE in subframe SF n+k when a CRC for uplink data received from the UE in subframe SF n by the HARQ manager is normal.

Furthermore, the third step may include, when it is determined that it is impossible for the BU to transmit an HARQ response to uplink data, received in subframe SF n by the RUs, to the UE via the HARQ manager in subframe SF n+k, transmitting, by the HARQ manager, an HARQ Ack response signal to the UE regardless of whether a CRC for uplink data received from the RUs in subframe SF n by the HARQ manager is normal or not when the HARQ manager has received a signal indicating that the uplink data has been normally received via another RU from the BU.

Furthermore, the third step may include, when it is determined that it is impossible for the BU to transmit an HARQ response to uplink data, received in subframe SF n by the RUs during a random access process, to the UE via the HARQ manager in subframe SF n+k, and a CRC for uplink data received by the HARQ manager is abnormal: a step of transferring, by the BU, non-allocated resource set I(n+k+k_1) in subframe SF n+k+k_1 to the HARQ manager, and, upon uplink resource allocation, setting, by the BU, whether each uplink resource allocation is cancellable or not in the cancellation possibility field of a resource allocation information transfer message, and transferring, by the BU, the resource allocation information transfer message to the HARQ managers; and a step of determining, by the HARQ managers, a set A(n+k+k_1) of cancellable uplink resource allocations of pieces of UE in subframe SF n+k+k_1 received from the BU.

Furthermore, the method may further include a step of, when a set P(n) of resources (RBs) used for existing uplink data transmission in subframe SF n is all included in the non-allocated resource set I(n+k+k_1), requesting, by the HARQ manager, the retransmission of uplink data in subframe SF n+k+k_1 by transmitting an HARQ Nack response signal to the UE in subframe SF n+k.

Furthermore, when a set P(n) of resources (RBs) used for existing uplink data transmission in subframe SF n is not all included in the non-allocated resource set I(n+k+k_1) but is all included in the union of the non-allocated resource set I(n+k+k_1) and the cancellable allocation resource set A(n+k+k_1), the HARQ manager may request the retransmission of uplink data in subframe SF n+k+k_1 by transmitting an HARQ Nack response signal to the UE in subframe SF n+k.

Furthermore, the HARQ manager may drop the UL DCI transmission of pieces of UE to which resources corresponding to P(n) have been allocated and notify the BU of the dropping, and the BU may take into account the dropping in the future uplink resource allocation of the corresponding pieces of UE.

Furthermore, when the set P(n) of resources (RBs) used for existing uplink data transmission in subframe SF n is not all included in the union of the non-allocated resource set I(n+k+k_1) and the cancellable allocation resource set A(n+k+k_1): the HARQ manager may transmit an HARQ Ack response signal to the UE in subframe SF n+k, and may notify the BU that the HARQ Ack response signal has been transmitted; the BU may perform new resource allocation so that the UE retransmits Msg3 at a subsequent uplink HARQ retransmission point, and may transfer the new resource allocation to the HARQ manager; and the HARQ manager may transmit the new resource allocation, received from the BU, to the UE in subframe SF n+k+k_2, which is the subsequent resource allocation point, thereby enabling the corresponding UE to retransmit uplink data in subframe n+2*k_2.

Furthermore, the third step may include, when it is determined that it is impossible for the BU to transmit an HARQ response to uplink data, received in subframe SF n by the RUs during a random access process, to the UE via the HARQ manager in subframe SF n+k, excluding resources used for existing uplink data transmission from resource allocation at a retransmission available point until uplink data is successfully transmitted, and requesting, by the HARQ manager, the UE to retransmit uplink data by using the excluded non-allocated resource when retransmission is required.

Furthermore, the third step may include, when it is determined that it is impossible for the BU to transmit an HARQ response to uplink data, received in subframe SF n by the RUs, to the UE via the HARQ manager in subframe SF n+k, and a CRC for uplink data received by the HARQ manager is abnormal, the HARQ manager may request retransmission using resources used for transmission whose reception has failed when the resources used for transmission whose reception has failed are included in the union of non-allocated resources, cancellable resources, and new transmission resources allocated to UE having transmitted data whose reception has failed.

Furthermore, the priorities of the resources to be used for the retransmission may have the sequence of the non-allocated resources, the new transmission resources allocated to UE having transmitted data whose reception has failed, and the cancellable resources.

Furthermore, non-adaptive HARQ retransmission may be requested when resources to be used for retransmission are identical to the resources used for transmission whose reception has failed, and adaptive HARQ retransmission may be requested when resources to be used for retransmission are not identical to the resources used for transmission whose reception has failed.

Furthermore, the HARQ manager may cancel the cancellable resource allocation to be used for retransmission or new resource allocation to the UE having failed in transmission, and may notify the BU of the cancellation, thereby enabling the BU to take into account the cancellation in future resource allocation.

Furthermore, the third step may include, when it is determined that it is impossible for the BU to transmit an HARQ response to uplink data, received in subframe SF n by the RUs, to the UE via the HARQ manager in subframe SF n+k, a CRC for uplink data received by the HARQ manager is abnormal, and resources required for retransmission are not found, causing the UE to maintain data whose transmission has failed in an HARQ buffer by transmitting only an HARQ Ack response signal to the UE, and requesting, by the BU, adaptive HARQ retransmission by allocating resources at a subsequent retransmission point.

Furthermore, the third step may include, when it is determined that it is impossible for the BU to transmit an HARQ response to uplink data, received in subframe SF n by the RUs, to the UE via the HARQ manager in subframe SF n+k, scheduling, by BU, uplink resource allocation for subframe SF n+k and subframe SF n+k_2 on the assumption that the reception of uplink data in subframe SF n is successful.

### Advantageous Effects

According to the present invention, there can be provided the method of efficient HARQ processing for uplink data in a distributed radio base station in which a BU and RUs are separately constructed.

### Description of Drawings

FIGS. 1 and 2 are diagrams showing the configuration of a distributed radio base station to which the present invention is applied;
FIG. 3 is a flowchart showing the overall process of a method of HARQ processing for uplink transmission in the distributed radio base station (100) which is configured as illustrated in FIGS. 1 and 2;
FIG. 4 is a diagram illustrating a method of HARQ processing for uplink transmission in the distributed radio base station (100) according to the present invention;
FIG. 5 is a flowchart showing the step of forming S-groups (50) (step S100 of FIG. 3) and the step of selecting HARQ managers (step S200 of FIG. 3) in detail;
FIG. 6 is a flowchart illustrating a process after the selection of HARQ managers;
FIG. 7 is a diagram illustrating a method of transmitting an HARQ response in the distributed radio base station (100);
FIGS. 8 and 9 are timing diagrams for the retransmission of Msg3;
FIG. 10 is a timing diagram for a process of performing Msg3 retransmission in subframe SF n+2*k_2 (in the case of FDD, k_2=8, n+16) because retransmission resources are not allocated in subframe SF n+k+k_1 (in the case of FDD, k=k_1=4, n+8);
FIG. 11 is a timing diagram for a process in which UE (40) performs Msg3 transmission by using retransmission resources scheduled for subframe SF n+k+k_1 (in the case of FDD, k=k_1=4, n+8);
FIG. 12 is a timing diagram for a case where non-adaptive HARQ retransmission is performed;
FIG. 13 is a timing diagram for a case where adaptive HARQ retransmission is performed; and
FIG. 14 is a timing diagram for a process of performing retransmission in subframe SF n+2*k_2 (in the case of FDD, k_2=8, n+16) because retransmission resources are not allocated in the above-described subframe SF n+k+k_1 (in the case of FDD, n+8).

### Best Mode

Embodiments of the present invention will be described in detail below with reference to the accompanying drawings.

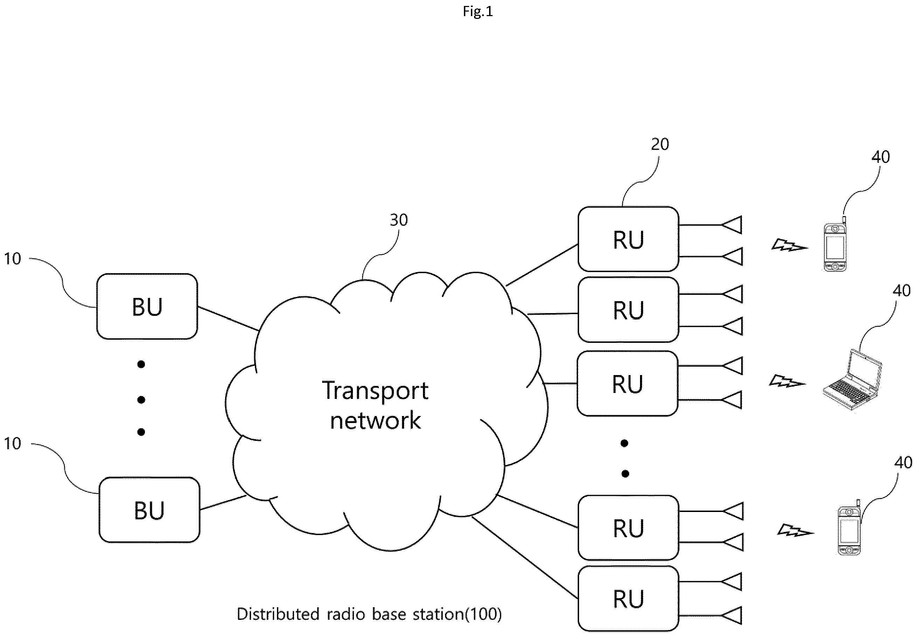

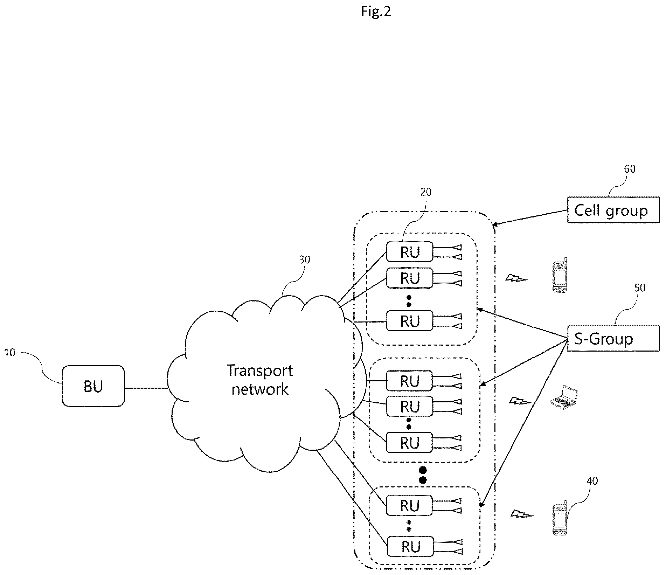

FIGS. 1 and 2 are diagrams showing the configuration of a distributed radio base station to which the present invention is applied.

The distributed radio base station 100 of FIGS. 1 and 2 is the technology which has been described in the section "Background Art" and which has been proposed by the present applicant. The details of the technology are disclosed in the above-described patent applications (Korean Patent Application Nos. 10-2014-0096526 and 10-2014-0096532), the content of which is incorporated into the present application. FIGS. 1 and 2 are intended to schematically illustrate the distributed radio base station 100 which is described herein in connection with the present invention.

FIG. 1 is a diagram illustrating the configuration of the distributed radio base station 100 to which the present invention is applied.

Referring to FIG. 1, the distributed radio base station 100 includes one or more base units (BUs) 10 and one or more radio unit (RUs) 20, and the BUs 10 and the RUs 20 are coupled with each other over a transport network 30.

The BUs 10 are connected to a core network (not shown), and function to process digital signals. The BUs 10 are generally installed in a central data center or the like, and transmit and receive data to and from the remote RUs 20 over the transport network 30. The BUs 10 are also commonly referred to as digital units (DUs).

In this case, the BUs 10 are logical units. Each of the BUs 10 may be formed as an independent physical unit, and a plurality of BUs 10 may be formed as a single physical unit.

The RUs 20 are installed in target service areas, wirelessly communicate with pieces of user equipment 40 in the target service areas, and transmit and receive data to and from the BUs 10 over the transport network 30.

The transport network 30 may be a 3-layer network such as an IP network, or may be a 2-layer network such as an Ethernet or the like. Alternatively, the transport network 30 may be constructed using another wired/wireless communication method.

FIG. 2 is a diagram illustrating a method of grouping RUs in the distributed radio base station 100.

Referring to FIG. 2, it can be seen that one or more RUs 20 are grouped and form an RU group 50 (hereinafter referred to as the "S-group"). Furthermore, in FIG. 2, three RU groups (S-groups) 50 form a single cell group 60.

The cell group 60 performs the function of a cell in a common radio communication system, which can be logically identified by pieces of user equipment 40. The cell group 60 is coupled to a single BU 10 over a transport network 30, and may be dynamically constructed by the BU 10. The S-groups 50 refer to groups of RUs each including one or more selected RUs 20 within the single cell group, and enable the RUs 20, required for communication with specific user equipment (UE) 40, to be selectively/limitedly operated. The S-groups 50 may be dynamically constructed, which facilitates interference control between cells, the reuse of physical radio resources through spatial segmentation within a cell, and dynamic cell construction.

The S-groups 50 may be constructed using various methods.

A first method is a method of segmenting a physical space into one or more S-groups 50 based on the physical space of a target area that will be served by the cell group 60. In this case, segment physical spaces may overlap each other. Each of the segment physical spaces is a set of RUs 20 supporting each physical space, and may form an S-group.

For example, in connection with the segmentation of a physical space, when a service is constructed within a high-rise building, each floor may be configured as a single S-group 50 and the overall building may be served using a plurality of S-groups 50.

A second method is a method of forming an S-group 50 for each piece of user equipment 40, which may be performed by a method described below.

Each RU 20 receives the uplink data (an uplink random access signal, a channel state information transmission signal, a paging response signal, an uplink terminal reference signal, or the like) of user equipment 40, and transmits the received uplink data to the BU 10. The BU 10 may collect the uplink data and information of the user equipment 40 received from one or more RUs 20, and may form an S-group 50 supporting the specific user equipment 40 by considering channel states between the RUs 20 and the user equipment 40.

Meanwhile, the S-group 50 may dynamically change according to a spatial segmentation policy or the movement of the user equipment 40. The distributed radio base station 100 to which the present invention is applied may be constructed, maintained and managed as one or more S-groups 50 based on spatial segmentation and one or more S-groups 50 based on respective pieces of user equipment 40 in combination. Furthermore, a radio multicast/broadcast service (for example, the eMBMS service of LTE, or the like) may use S-groups 50 based on spatial segmentation or a cell group 60, and a unicast service for specific user equipment 40 may use an S-group 50 for each piece of user equipment 40 or spatial segmentation-based S-groups 50/a cell group 60.

When the S-group 50 for each piece of user equipment 40 is used for a unicast service, an effect is achieved in that interference between S-groups 50 or cell groups 60 can be controlled by transmitting a radio signal to the user equipment 40 only via required RUs 20.

Meanwhile, a single RU 20 may belong to one or more S-groups 50, and may belong to one or more cell groups 60. Furthermore, each S-group 50 may also belong to one or more cell groups 60.

Meanwhile, the S-group 50 may be changed to be dynamically formed.

Furthermore, each RU 20 may belong to one or more S-groups 50, and may belong to one or more cell groups 60.

Each BU 10 may be connected to RUs 20 belonging to a single cell group 60 via the transport network 30, and may perform the function of a radio base station. Each BU 10 may transfer data to one specific RU 10 of the corresponding cell group 60. Furthermore, each BU 10 may transfer the same data to all RUs 20 belonging to a specific S-group 50, and may transfer the same data to all the RUs 20 belonging to the specific cell group 60.

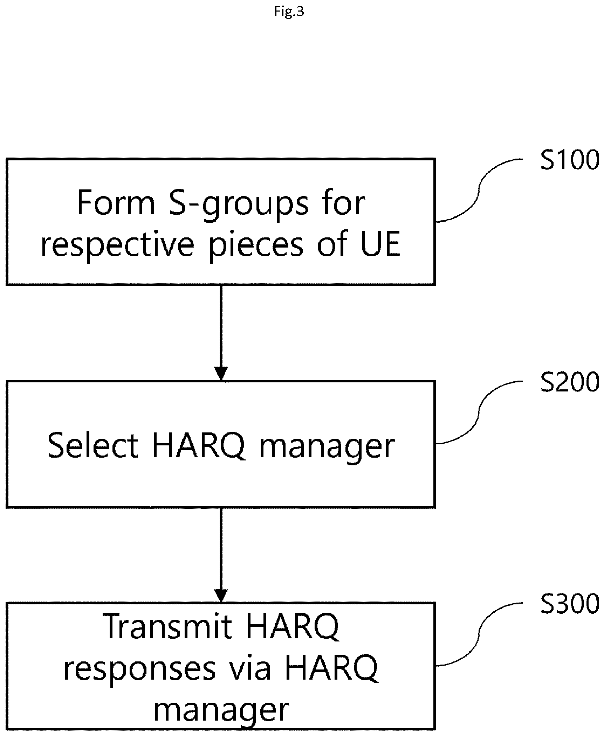

FIG. 3 is a flowchart showing the overall process of a method of HARQ processing for uplink transmission in the distributed radio base station 100 which is configured as illustrated in FIGS. 1 and 2.

Referring to FIG. 3, first, the BU 10 forms the S-groups 50 by grouping the RUs 20 for the individual pieces of UE 40 at step S100.

Furthermore, the BU 10 selects any one of the RUs 20, belonging to each of the S-groups 50 for the respective pieces of UE 40, as an HARQ manager at step S110.

Thereafter, the BU 10 transmits an HARQ response to the UE 40 via the RU selected as the HARQ manager at step S110.

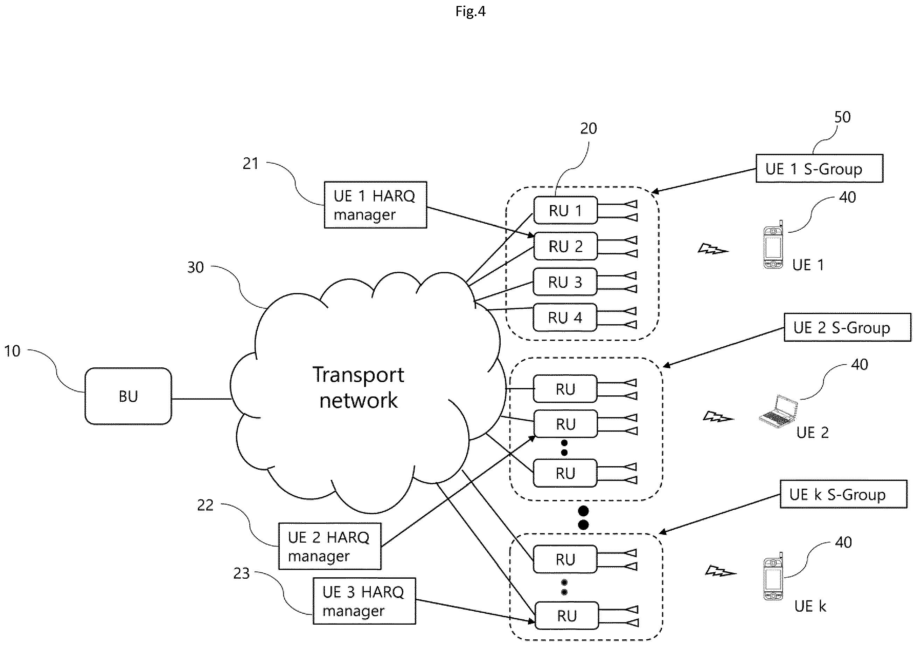

This process will be described in detail below with reference to FIG. 4 and its following drawings.

FIG. 4 is a diagram illustrating a method of HARQ processing for uplink transmission in the distributed radio base station 100 according to the present invention.

FIG. 4 shows a state in which S-groups 50 (UE 1 S-group, UE 2 S-group,..., and UE k S-group) are formed for respective pieces of UE 40 (UE 1, UE 2,..., and UE k), as described in conjunction with FIGS. 1 and 2. Each of the S-groups 50 takes charge of uplink data reception for corresponding UE 40.

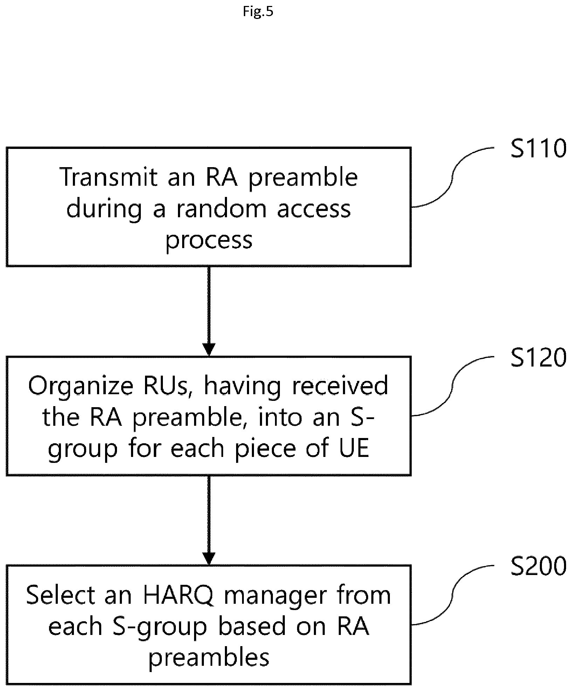

First, step S100 of FIG. 3, i.e., the step at which the BU 10 forms the S-groups 50 by grouping the RUs 20 for the individual pieces of UE 40, and step S200, i.e., the step at which the BU 10 selects any one of the RUs 20, belonging to each of the S-groups 50 for the respective pieces of UE 40, as an HARQ manager, are described with reference to FIG. 5.

FIG. 5 is a flowchart showing the above-described step of forming S-groups 50 (step S100 of FIG. 3) and the above-described step of selecting HARQ managers (step S200 of FIG. 3) in detail.

Referring to FIG. 5, first, UE 140 starts a random access process in order to access a core network. UE 140 transmits an RA preamble, and the RUs 20 (RU 1, RU 2, RU 3, and RU 4) receive the RA preamble of UE 140 and transfer the RA preamble to the BU 10 over a transport network 30 at step S110.

In this case, information transferred from the RUs 20 (RU 1, RU 2, RU 3, and RU 4) to the BU 10 may include the IDs of the receiving RUs, CRC information regarding normal or abnormal reception, uplink received signal strengths, timing advance values, etc. according to the type of reception data.

Thereafter, the BU 10 may select the RUs (RU 1, RU 2, RU 3, and RU 4), having received the RA preamble of UE 140, as an S-group 50 for UE 140 at step S120.

In this case, another method may be to allow individual RUs 20 to monitor signals of adjacent RUs 20, to dynamically determine the radio proximities between the RUs 20 through the monitoring, and to then dynamically form S-groups 50. These S-groups 50 may be used as S-groups for pieces of UE 40 within the service areas of the corresponding S-groups 50.

Furthermore, during operation, the BU 10 may measure corresponding UE uplink transmission (PUSCH, PUCCH, SRS, RA preamble, etc.) received signal strengths or reception error rates from RUs 20, not belonging to the S-group 50 of the current UE 40 but adjacent to the HARQ manager of the UE 40 to be described later, by using dynamic radio proximities between the RUs 20, and may then form S-groups 50 for the respective pieces of UE 40, thereby dynamically managing the S-groups 50.

Furthermore, an RU whose received signal strength for the uplink transmission (PUSCH, PUCCH, SRS, or RA preamble) of an UE 40 is equal to or lower than a predetermined value Signal_min or reception error rate is equal to or higher than a predetermined value RxErrorRate_max during a predetermined period Period_eval may be deleted from the S-group of the corresponding UE. In this case, Period_eval, Signal_min, and RxErrorRate_max are system setting values.

When the S-groups 50 for the respective pieces of UE 40 have been formed as described above, the BU 10 selects any one of the RUs 20, belonging to each of the S-groups 50, as an HARQ manager at step S200. This selection may be performed based on the reception information of RA preambles received from respective RUs 20 within the S-group 50 by the BU 10.

For example, upon initial access of each piece of UE 40 through a random access process, the BU 10 may analyze the reception information of RA preambles received from the respective RUs within the S-group 50, and may select an RU having the smallest timing advance value as the initial HARQ manager 21, 22 or 23 of the corresponding UE 40.

A case where a timing advance value is large may be viewed as a case where stable operation is performed due to a close distance or a case where received signal strength is high, and thus initial HARQ managers may be set using the above values.

The HARQ managers 21, 22 and 23 for the respective pieces of UE 40 function to transmit uplink resource allocation information for the corresponding pieces of UE 40 to the pieces of UE via DCI0 or random access responses. Furthermore, the HARQ managers 21, 22 and 23 also function to transmit HARQ responses to the uplink transmission of the corresponding pieces of UE to the pieces of UE.

FIG. 4 shows a state in which based on the same principle, the BU 10 having received the RA preamble of UE 140 from a corresponding S-group 50 has selected RU 2 as the HARQ manager 21 of UE 1 40. Furthermore, it can be seen that one of the RUs of a corresponding S-group has been selected as an HARQ manager 22,..., or 23 for each of the other pieces of UE (UE 2,..., and UE k).

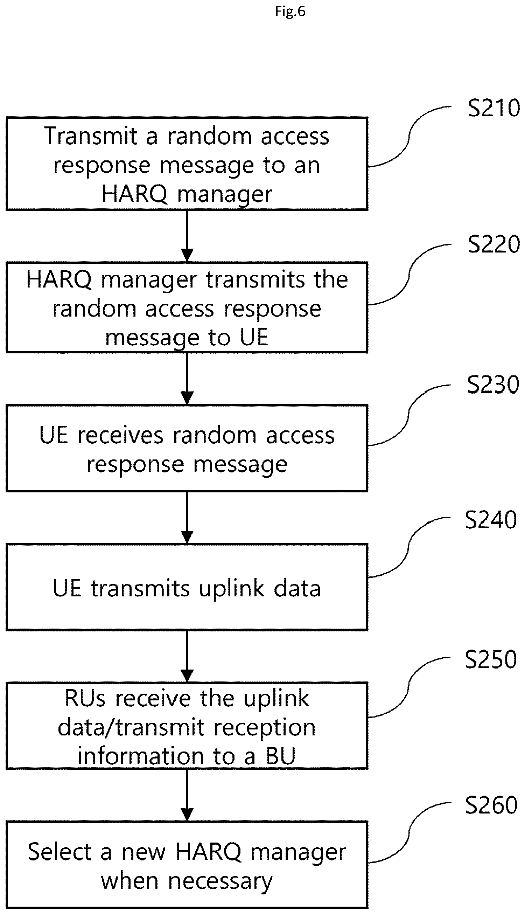

FIG. 6 is a flowchart illustrating a process after the selection of HARQ managers.

Once the HARQ managers 21, 22 and 23 have been selected for the respective pieces of UE 40 as described the above, the BU 10 generates random access response messages for the random access of the corresponding pieces of UE 40 via the corresponding HARQ managers 21, 22 and 23, and transmits the random access response messages to the HARQ managers 21, 22 and 23 of the corresponding pieces of UE 40 at step S210.

Then the HARQ managers 21, 22 and 23 transmit the random access response messages to the corresponding pieces of UE 40 1, UE 2,..., and UE k at step S220.

Meanwhile, the corresponding pieces of UE 40 receive the random access response messages via the corresponding HARQ managers 21, 22 and 23 at step S230, and transmit uplink data to the RUs by using uplink resource allocations included in the random access response messages at step S240.

The RUs of an S-group 50 for each piece of UE 40 receive the uplink data of the corresponding UE 40, and transfer the received uplink data, together with uplink data reception information, to the BU 10 at step S250. In this case, the uplink data reception information includes the IDs of the receiving RUs, CRC information regarding normal or abnormal reception, uplink received signal strengths, and timing advance values.

In this case, the BU 10 may select a new HARQ manager for the corresponding UE 40 by using the uplink reception information, i.e., the CRC information, the uplink received signal strengths, and the timing advance values, received from the RUs of the S-group 50 for each piece of UE 40 at step S260.

In this case, the BU 10 may select a new HARQ manager according to the following method:
1) Step 1
   A set of RUs 20 for each of which an uplink data CRC is normal is set to A={RU_i}.
2) Step 2
   When set A is null, i.e., when the RUs 20 of all the S-groups 50 have abnormally received uplink data, RU_k is selected as a new HARQ manager 21, 22 or 23 in the case where the received signal strength of RU_k, having an uplink received signal (PUSCH, PUCCH, SRS, RA preamble, etc.) strength which is the highest of those of the RUs 20 of each of the S-groups 50k, is higher than the received signal strength of a corresponding existing HARQ manager 21, 22 or 23 by a predetermined value Signal_delta or more. Otherwise, the existing HARQ managers 21, 22 and 23 are maintained.
3) Step 3
   When set A is not null, RU_k of set A having the highest uplink received signal strength is selected as a new HARQ manager candidate. When the HARQ managers 21, 22 and 23 belong to set A, the corresponding RU_k is selected as a new HARQ manager 21, 22 or 23 in the case where the uplink received signal strength of RU_k, i.e., a new HARQ manager candidate, is higher than the uplink received signal strength of a corresponding existing HARQ manager 21, 22 or 23 by a predetermined value Signal_delta or more. Otherwise, the existing HARQ managers are maintained without change. Meanwhile, when the existing HARQ managers do not belong to set A, the corresponding RU RU_k is selected as a new HARQ manager 21, 22 or 23. In this case, the predetermined value Signal_delta is system setting information.

Next, step S300 of FIG. 3, i.e., the step at which the BU 10 transmits HARQ responses via the HARQ managers 21, 22 and 23, is described.

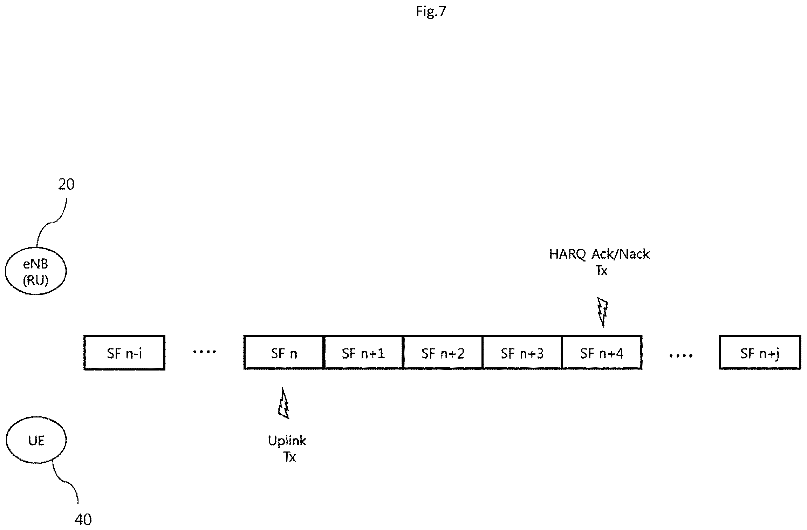

FIG. 7 is a diagram illustrating a method of transmitting an HARQ response in the distributed radio base station 100. This diagram is a transmission timing diagram for uplink transmission and HARQ response transmission thereto in an LTE frequency division duplex (FDD) scheme.

As shown in FIG. 7, in the case of LTE, an HARQ response to uplink data received from UE in subframe SF n is transmitted in subframe SF n+k. In the case of FDD, k=4. In other words, subframe SF n+4 is scheduled for the transmission of the HARQ response.

As described above, in the distributed base station 100 to which the present invention is applied, transmission delay may occur between the BU 10 and the RUs 20. A method of processing an HARQ response to uplink data received in subframe SF n varies depending on the level of such transmission delay.

A first case corresponds to a case where, since transmission delay between the BU 10 and the RU 20 is sufficiently small, the RU 20 can transmit uplink data, received in subframe SF n, to the BU 10, the BU 10 can determine an HARQ response, i.e., an HARQ Ack/Nack response, by processing the uplink data and transmit the HARQ Ack/Nack response to the HARQ manager 21, 22 or 23, and the HARQ manager 21, 22 or 23 can transmit the HARQ Ack/Nack response signal to the UE 40 in subframe SF n+k.

In this case, when the BU 10 receives uplink data for which an CRC is normal from at least one RU 20 of an S-group 50, the BU 10 transfers an HARQ Ack response to the HARQ manager 21, 22 or 23, and the HARQ manager 21, 22 or 23 transmits the HARQ Ack response to the UE 40 in subframe SF n+k. In this case, a new HARQ manager may be selected, as described above.

Meanwhile, when the BU 10 receives uplink data for which an CRC is abnormal from all the RUs 20 of the S-groups 50, the BU 10 transfers an HARQ Nack response to the HARQ managers 21, 22 and 23, and the HARQ manager 21 transmits the received HARQ Nack response to the corresponding UE 40 in subframe SF n+k.

In other words, when transmission delay is sufficiently small, the BU 10 schedules the HARQ manager 21 to transmit an HARQ response to uplink data in subframe SF n+k depending on whether an CRC is normal or not.

A second case corresponds to a case where, since the transmission delay between the BU 10 and the RU 20 is large, it is determined that it is impossible for the BU 10 to process uplink data received in subframe SF n and to then transmit an HARQ response via the RU 20 in subframe SF n+k (in the case of FDD, k=4).

This second case may be divided into two cases and then processed.
1. Uplink transmission and HARQ response processing during an initial random access process
2. General uplink resource allocation, uplink transmission, and HARQ response processing

First, "1. Uplink transmission and HARQ response processing during an initial random access process" is described.

When uplink transmission in subframe SF n is scheduled due to a random access response message, the RUs 20 of the S-group 50 of corresponding UE 40 receive uplink data from the UE 40 in subframe SF n.

Furthermore, the RUs 20 of the S-group 50 transfer the uplink data and uplink data reception information to the BU 10. In this case, when each of the RUs 20 is notified by the BU 10 that the corresponding uplink data has been normally received via another RU 20, the RU 20 transfers only uplink data reception information, exclusive of the received uplink data, to the BU 10.

When the BU 10 receive uplink data for which a CRC is normal from at least one RU 20 of an S-group 50 and simultaneously receives an CRC error from the HARQ manager 21, 22 or 23 of corresponding UE 40, the BU 10 notifies the RUs 20 of the S-group 50 of the corresponding UE 40 that the corresponding transmission has been normally received.

The HARQ manager 21, 22 or 23 of the corresponding UE 40 takes charge of an HARQ response to the corresponding uplink transmission. The processing of an HARQ response to uplink data received by the HARQ manager 21, 22 or 23 is divided into the following three cases:
A. When the HARQ manager 21, 22 or 23 is notified by the BU 10 that the corresponding uplink data has been normally received from another RU 20 of the corresponding S-group 50, the HARQ manager 21, 22 or 23 transmits an HARQ Ack response to the UE 40 in subframe SF n+k regardless of whether a CRC for the received uplink data is normal or not.
B. When a CRC for the uplink data received by the HARQ manager 21, 22 or 23 is normal, the HARQ manager 21, 22 or 23 transmits an HARQ Ack response to the UE 40 in subframe SF n+k.
C. When a CRC for the uplink data received by the HARQ manager 21, 22 or 23 is abnormal, the HARQ manager 21, 22 or 23 transmits an HARQ Nack response in subframe SF n+k, thereby enabling the corresponding UE 40 to retransmit uplink data in subframe SF n+k+k_1 (in the case of FDD, k=k_1=4, and SF n+8). In this case, the following processing is performed based on the details of the uplink resource allocation of subframe SF n+k+k_1 (in the case of FDD, SF n+8).

First, the BU 10 transfers non-allocated resource set I(n+k+k_1)={unused resource blocks (RBs) which have not been allocated by the BU 10 to any UE 40 in any case including semi-persistent scheduling in subframe SF n+k+k_1} of subframe SF n+k+k_1 (in the case of FDD, k=k_1=4, n+8) to the HARQ managers 21, 22 and 23.

In other words, I(n+k+k_1) refers to a set of non-allocated resources in subframe SF n+k+k_1.

Furthermore, upon uplink resource allocation, the BU 10 sets information about the possibility of the cancelation of each uplink resource allocation in the cancellation possibility field of a resource allocation information transfer message based on the sequence of priorities, for example, the sequence of initial transmission/retransmitted resource, corresponding UE uplink resource allocation QoS, etc., and transfers the resource allocation information transfer message to each of the HARQ managers 21, 22 and 23.

Each of the HARQ managers 21, 22 and 23 defines a set A(n+k+k_1) of cancellable uplink resource (RB) allocations of the pieces of UE 40 of subframe SF n+k+k_1 (in the case of FDD, k=k_1=4, n+8) received from the BU 10, as follows:
A(n+k+k_1)={the cancellable ones of the uplink resource allocations of subframe SF n+k+k_1 of all the pieces of UE received from the BU by the corresponding HARQ manager}

In other words, A(n+k+k_1) refers to a set of cancellable resources which belong to already allocated resources and which are cancellable in subframe SF n+k+k_1.

Furthermore, a set of resources (RBs) used for existing Msg3 transmission in subframe SF n is defined as P(n). In other words, P(n) refers to a set of resources used for the transmission of uplink data whose reception has failed in subframe SF n.
(1) Case where P(n) is all included in non-allocated resource set I(n+k+k_1) (in the case of FDD, n+8)
   In this case, the HARQ managers 21, 22 and 23 requests the retransmission of Msg3 in SF n+k+k_1 (in the case of FDD, n+8) by transmitting an HARQ Nack to the UE 40 in subframe SF n+k (in the case of FDD, n+4).

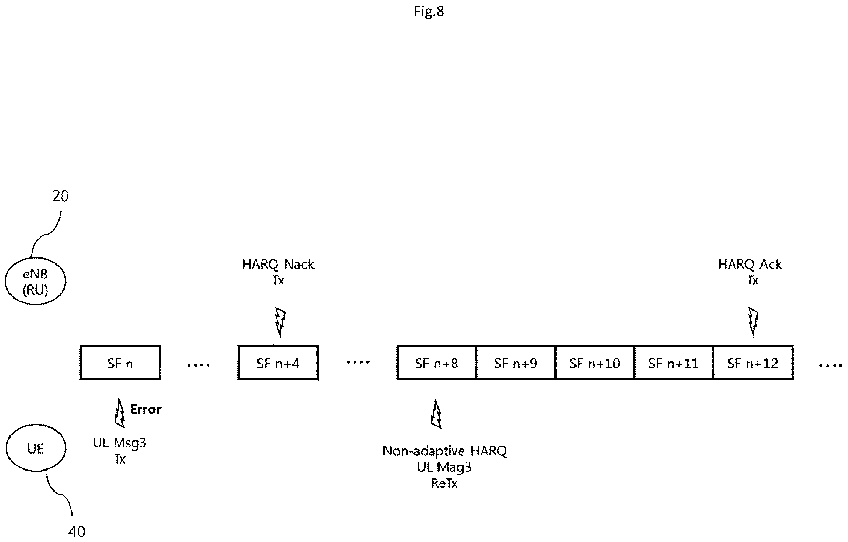

   FIG. 8 is a timing diagram for the retransmission of Msg3 in this case.
   This case corresponds to a case where resources used for the transmission of uplink data in subframe SF n are included in a non-allocated resource set, and also corresponds to a case where the HARQ managers 21, 22 and 23 request non-adaptive HARQ retransmission by using the same resources.
(2) Case where P(n) is not all included in the non-allocated resource set I(n+k+k_1) (in the case of FDD, n+8) but P(n) is all included in the union of I(n+k+k_1) and cancellable allocation resource set A(n+k+k_1)
   In this case, the HARQ manager 21, 22 or 23 requests Msg3 retransmission, i.e., the retransmission of the uplink data, in subframe SF n+k+k_1 (in the case of FDD, n+8) by transmitting an HARQ Nack response signal to the UE 40 in subframe SF n+k (in the case of FDD, n+4).
   Furthermore, the HARQ managers 21, 22 and 23 drop the UL DCI transmission of pieces of UE 40 to which the resources corresponding to P(n) have been allocated, and notify the BU 10 of the dropping.
   The BU 10 may take into account the dropping in the future uplink resource allocation of the corresponding pieces of UE 40.

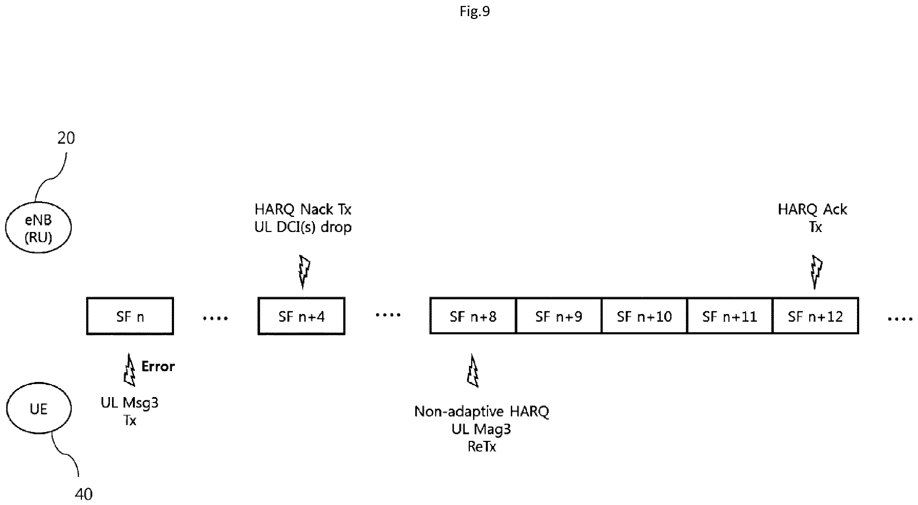

   FIG. 9 is a timing diagram for Msg3 retransmission in this case.
   This case corresponds to a case where, when resources used for transmission whose reception has failed are included in the union of the non-allocated resource set and the cancellable allocation resource set, the HARQ managers 21, 22 and 23 request non-adaptive HARQ retransmission by using the same resources. Furthermore, a cancellable resource allocation used for the performance of retransmission is cancelled, and notification of the cancelation is provided to the BU 10, thereby enabling the cancelation to be taken into account in future resource allocation.
(3) Case where P(n) is not all included in the union of non-allocated resource set I(n+k+k_1) (in the case of FDD, n+8) and cancellable allocation resource set A(n+k+k_1)
   This case corresponds to a case where, since a collision with the transmission of another piece of UE 40 occurs when corresponding UE 40 retransmits Msg3 in subframe SF n+k+k_1, the corresponding UE 40 cannot perform Msg3 retransmission.

First, the HARQ manager 21, 22 or 23 transmits an HARQ Ack response signal to the UE 40 in subframe SF n+k (in the case of FDD, n+4). Furthermore, the HARQ manager 21, 22 or 23 notifies the BU 10 that the HARQ Ack response signal has been transmitted in the case where a CRC is abnormal.

Furthermore, the BU 10 performs new resource allocation so that the corresponding UE 40 can retransmit Msg3 at a subsequent uplink HARQ retransmission point (in the case of FDD, subframe SF n+16), and notifies the HARQ manager 21,22 or 23 of the new resource allocation. In this case, a UL DCI has the temporary C-RNTI value of the corresponding UE 40 as an RNTI value.

The HARQ manager 21, 22 or 23 transmits the new resource allocation, received from the BU 10, to the UE 40 in subframe SF n+k+k_2 (in the case of FDD, k=4, k_2=8, n+12), i.e., a subsequent resource allocation point, thereby enabling the corresponding UE 40 to retransmit Msg3 in subframe SF n+2*k_2 (in the case of FDD, k_2=8, n+16).

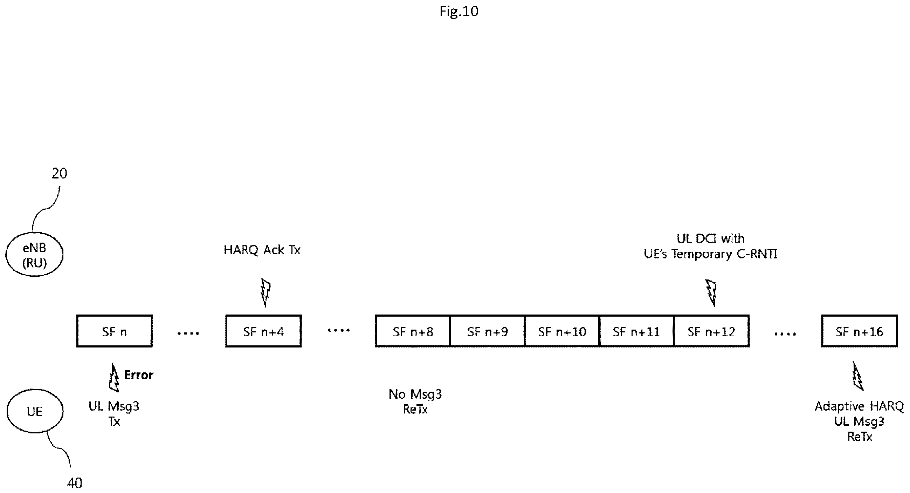

FIG. 10 is a timing diagram for a process of performing Msg3 retransmission in subframe SF n+2*k_2 (in the case of FDD, k_2=8, n+16) because retransmission resources are not allocated in subframe SF n+k+k_1 (in the case of FDD, k=k_1=4, n+8) in the above case.

This corresponds to a case where, when resources used for transmission whose reception has failed cannot be allocated for subsequent retransmission, only an HARQ Ack response signal is transmitted to the UE 40, the UE 40 is caused to maintain data whose transmission has failed in an HARQ buffer, and the BU requests adaptive HARQ retransmission by allocating resources at a subsequent retransmission point.

Meanwhile, a method different from the methods of (1) to (3) described with reference to FIGS. 8 to 10 may be used, as follows:
In other words, in order to prevent Msg3 retransmission delay from occurring as in the cases of FIGS. 8 to 10, the BU 10 may not allocate transmission resources, allocated via a random access response message, to other pieces of UE 40 in retransmission available subframe SF until the reception of Msg3 is successfully completed by the corresponding UE 40 so that the UE 40 performing random access can retransmit Msg3.

In other words, resources allocated for Msg3 transmission may be excluded from resource allocation at a retransmission available point until the transmission of Msg3 is successfully completed. The HARQ manager 21, 22 or 23 may request non-adaptive HARQ retransmission by using the non-allocated resources when retransmission is required.

In this case, the HARQ manager 21, 22 or 23 may transmit an HARQ Nack response signal to the UE 40 in subframe SF n+k (in the case of FDD, k=4, n+4). Alternatively, the HARQ manager 21, 22 or 23 may generate a new UL DCI in subframe SF n+k (in the case of FDD, k=4, n+4) by using the temporary C-RNTI of the corresponding UE 40, and may transmit the new UL DCI to the UE 40.

In this case, although a case where resources allocated for Msg3 are not used one or more times occurs, there can be prevented an Msg3 transmission failure and a transmission failure of another piece of UE 40 attributable to transmission resource redundancy and increases in resources and random access time required for corresponding retransmission.

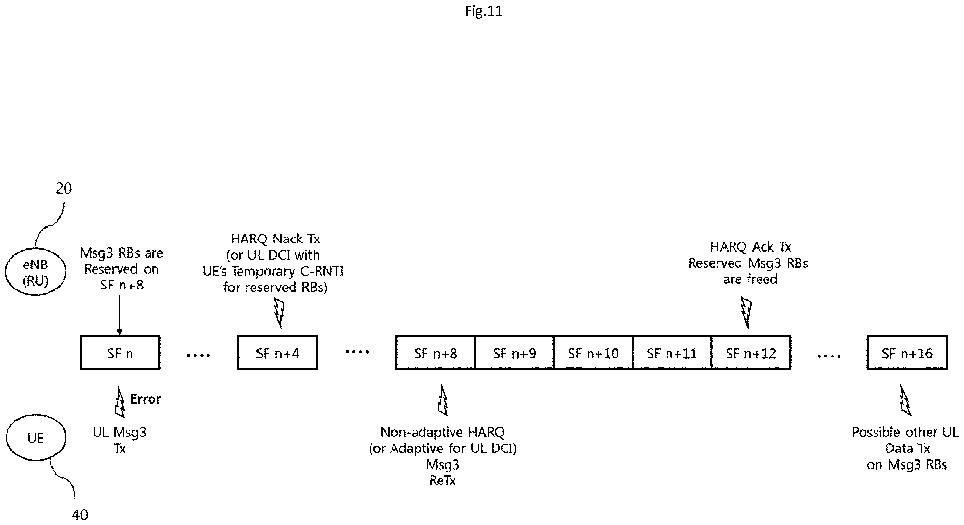

FIG. 11 is a timing diagram for a process in which the UE 40 performs Msg3 transmission by using retransmission resources scheduled for subframe SF n+k+k_1 (in the case of FDD, k=k_1=4, n+8).

Next, there is described "2. General uplink resource allocation, uplink transmission, and HARQ response processing," i.e., the second case of the case where, since the transmission delay between the BU 10 and the RU 20 is large, it is impossible for the BU 10 to process uplink data received in subframe SF n and transmit an HARQ response in subframe SF n+k (in the case of FDD, k=4).

First, the BU 10 needs to schedule HARQ Ack/Nack information, which is transmitted to the UE 40 in subframe SF n+k (in the case of FDD, k=4) by using the uplink data reception information of subframe SF n, and the uplink resource allocation information of subframe SF n+k_2 (in the case of FDD, k_2=8). However, when transmission delay between the BU and the RUs is large, it is impossible to know information about uplink transmission results in subframe SF n at a point when an HARQ response and uplink resource allocation information which need to be transmitted in subframe SF n+k are scheduled.

Accordingly, the BU 10 performs optimistic uplink resource allocation on the assumption that uplink reception in subframe SF n is successful.

When an RU 20 receives uplink data in subframe SF n, the RU 20 transfers uplink data reception information to the BU 10. In this case, when the RU 20 is notified by the BU 10 that the corresponding uplink data has been normally received, the RU 20 transfers reception information, exclusive of the received uplink data, to the BU 10.

When the BU 10 has received uplink data for which a CRC is normal from at least one RU 20 of an S-group and has simultaneously received a CRC error from the HARQ manager 21, 22 or 23 of the corresponding UE 40, the BU 10 notifies the RUs 20 of the S-group of the corresponding UE 40 that the corresponding transmission has been normally received.

The HARQ manager 21, 22 or 23 of the corresponding UE 40 takes charge of an HARQ response to the corresponding uplink data transmission.

In this case, the HARQ manager 21, 22 or 23 of the corresponding UE 40 follows the following processing process:
A. When the HARQ manager 21, 22 or 23 is notified by the BU 10 that the corresponding uplink data has been normally received via another RU of the S-group, the HARQ manager 21, 22 or 23 transmits an HARQ Ack response signal in subframe SF n+k regardless of whether a CRC for the received uplink data is normal or not.
B. When a CRC for the uplink data received by the HARQ manager 21, 22 or 23 is normal, the HARQ manager 21, 22 or 23 transmits an HARQ Ack response signal to the UE 40 in subframe SF n+k (in the case of FDD, k=4).
C. When a CRC for the uplink data received by the HARQ manager 21, 22 or 23 is abnormal:
   (1) a set of resources (RBs) used for the transmission of the uplink data received by the HARQ manager 21, 22 or 23 in subframe SF n is defined as U(n).
   (2) the union of the above-described non-allocated resource set I(n+k+k_1) (in the case of FDD, k=k_1=4, n+8) and U(n) is defined as I_fixed(n+k+k_1).
   (3) when the resource allocation of subframe SF n+k+k_1 of the corresponding UE 40 is present, this resource allocation set is defined as A_mine(n+k+k_1). A_mine(n+k+k_1) is a subset of A(n+k+k_1).
   (4) Penalty(Alloc) for an arbitrary resource allocation set Alloc is defined, as follows:
      Penalty(Alloc)= the total sum of the numbers of RBs of resource allocations of all other pieces of UE 40 which belong to pieces of UE 40, other than the corresponding UE 40, and each of which has an overlap of one or more resources in connection with Alloc

      For example, when the resource allocations of UE 40_1 and UE 40_2, other than the corresponding UE 40, are 5 and 10, respectively, and the resource allocations of UE 40_1 and UE 40_2 have overlaps of 2RB and 3RB, respectively, in connection with Alloc, Penalty(Alloc)=5+10= 15.
   (5) The following variables are initialized to FALSE when the HARQ managers 21, 22 and 23 starts operation in each subframe SF.
      - Non-adaptive-HARQ
      - my-adaptive-HARQ
      - my-idle-adaptive-HARQ
      - all_1-adaptive-HARQ
      - all_2-adaptive-HARQ
      - HARQ-ReTx-Schedule
   (6) When U(n) is all included in the union of non-allocated resource set I(n+k+k_1) and cancellable allocation resource set A(n+k+k_1) received from the BU 10 by the HARQ manager 21, 22 or 23:
      - in this case, the corresponding UE 40 may perform non-adaptive HARQ retransmission in subframe SF n+k+k_1 (in the case of FDD, n+8) by using resource allocation U(n+k+k_1) identical to U(n).
      - the HARQ manager sets non-adaptive-HARQ to TRUE.
      - a set of all pieces of UE 40 having resource allocation which has an overlap of one or more resources in connection with resource allocation U(n+k+k_1) is referred to as "V."
   (7) When the resource allocation A_mine(n+k+k_1) of the corresponding UE 40 is not null and the number of RBs is equal to or larger than the number of RBs of U(n):
      - adaptive HARQ retransmission may be performed in subframe SF n+k+k_1 (in the case of FDD, n+8) by using the resource allocation A_mine(n+k+k_1) of the corresponding UE 40.
      - the HARQ manager 21,22 or 23 set my-adaptive-HARQ to TRUE.
      - a new UL DCI is generated by modifying the existing UL DCI of the corresponding UE, and NDI is set to non-toggling.
      - new retransmission resource allocation my_alloc may vary adaptively depending on the number of RBs of the corresponding UE.
      - for reference, Penalty my_alloc=0.
   (8) When A_mine(n+k+k_1) is not null, the number of RBs is smaller than the number of RBs of U(n), and the number of RBs of the union of I_fixed(n+k+k_1) and the resource allocation A_mine(n+k+k_1) of the corresponding UE 40 is equal to or larger than the number of RBs of U(n):
      - adaptive HARQ retransmission is performed using the union of I_fixed(n+k+k_1) and A_mine(n+k+k_1).
      - when a continuous resource allocation equal to or larger than the number of RBs of U(n) is possible, new resource allocation my_idle_alloc_1 is generated using the continuous resource allocation.
      - if possible, new resource allocation my_idle_alloc_2 is generated using two continuous resource allocations.
      - the HARQ manager 21,22 or 23 sets my-idle-adaptive-HARQ to TRUE.
      - when my_idle_alloc_1 and my_idle_alloc_2 are all present, the selection between the two may vary depending on whether the support of the UE 40 is possible or not.
      - a new UL DCI is generated by modifying the existing UL DCI of the corresponding UE 40, and NDI is set to non-toggling.
      - new retransmission resource allocation my_alloc may vary adaptively depending on the number of RBs of the resource allocation of the corresponding UE.
   (9) When the number of RBs of the union of I_fixed(n+k+k_1) and A(n+k+k_1) is equal to or larger than the number of RBs of U(n):
      - a set of continuous resource allocations Alloc_1_J (j=0, 1, 2,...) equal to or larger than the number of RBs of U(n) which can be generated through the combination of the resource allocations of pieces of UE 40 included in RBsI_fixed(n+k+k_1) and A(n+k+k_1) is referred to as "S_1."
      - a set of discontinuous resource allocations Alloc_2-j (j=0, 1, 2,...) which can be generated by the two combinations of the resource allocations of pieces of UE 40 included in I_fixed(n+k+k_1) and A(n+k+k_1) and which is equal to or larger than the number of RBs of U(n) is referred to as "S_2."
      - when S_1 is not null, a resource allocation which belongs to resource allocations Alloc_1_j belonging to S_1 and whose Penalty(Alloc)_1_j is smallest is referred to as Alloc_1_min. Furthermore, the HARQ manager 21, 22 or 23 sets all_1-adaptive-HARQ to TRUE.
      - when S_2 is not null, a resource allocation which belongs to resource allocations Alloc_2_j belonging to S_2 and whose Penalty(Alloc)_2_j is smallest is referred to as Alloc_2_min. Furthermore, the HARQ manager 21, 22 or 23 sets all_2-adaptive-HARQ to TRUE.
      - when all_1-adaptive-HARQ=all_2-adaptive-HARQ=TRUE, the selection between the two may be made depending on whether the support of the UE 40 is possible or not.
   (10) When non-adaptive-HARQ=TRUE and Penalty U(n+k+k_1)=0, non-adaptive HARQ retransmission is performed using non-allocated resources or the allocated resources of the corresponding UE 40.
      - The HARQ manager 21, 22 or 23 transmits an HARQ Nack response signal to the corresponding UE 40 in subframe SF n+k (in the case of FDD, n+4).
      - The UL DCI transmission of pieces of UE 40 belonging to V are dropped, and the BU 10 is notified of the dropping. The BU 10 may take into account the UL DCI drop information of the pieces of UE 40 in future uplink resource scheduling.
      - HARQ-ReTX-Schedule is set to TRUE. Furthermore, the corresponding UE 40 performs non-adaptive retransmission in subframe SF n+k+k_1 (in the case of FDD, k=K_1=4, n+8) by using the same uplink resources used for previous transmission.

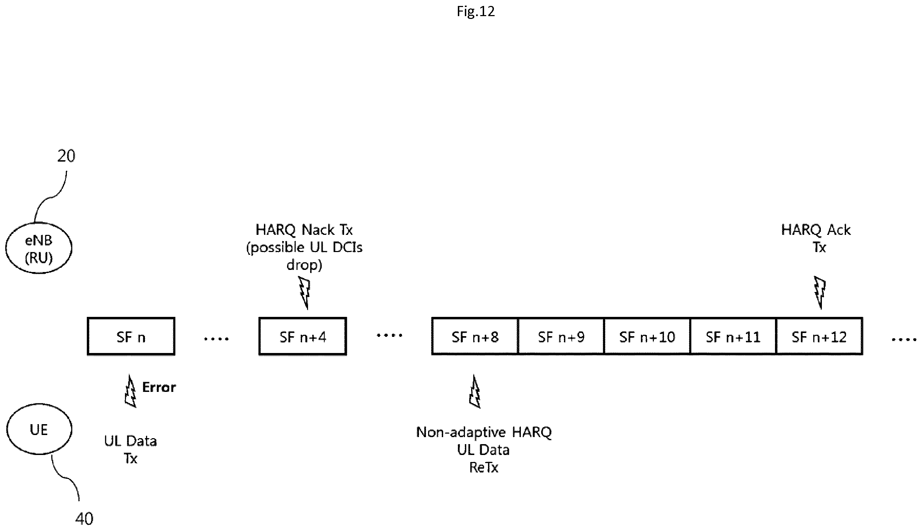

      - FIG. 12 is a timing diagram for a case where the above-described non-adaptive HARQ retransmission is performed.
   (11) When my-adaptive-HARQ=TRUE or my-idle-adaptive-HARQ=TRUE, adaptive HARQ retransmission is performed using non-allocated resources or the allocated resources of the corresponding UE 40.
      - When my-adaptive-HARQ=TRUE, a new UL DCI is generated using my_alloc.
      - Otherwise, a new UL DCI is generated using my_idle_alloc_1 or my_idle_alloc_2. When the two resource allocations are all possible, the selection between the two may be made depending on whether the support of the UE 40 is possible or not.
      - The existing UL DCI of the corresponding UE 40 is replaced with the new UL DCI.
      - The resource allocation of the new UL DCI may be equal to or larger than the number of RBs of U(n).
      - The NDI of the new UL DCI is set to non-toggling.
      - The HARQ manager 21, 22 or 23 transmits the new UL DCI to the corresponding UE 40 in subframe SF n+k (in the case of FDD, n+4).
      - The HARQ manager 21, 22 or 23 notifies the BU 10 that the existing UL DCI has been replaced with the new UL DCI. The BU 10 may take into account the replacement in the future uplink resource scheduling of the UE 40.
      - HARQ-ReTX-Schedule is set to TRUE. Furthermore, the corresponding UE 40 performs adaptive retransmission in subframe SF n+k+k_1 (in the case of FDD, k=K_1=4, n+8) by using uplink resources allocated to the new UL DCI.

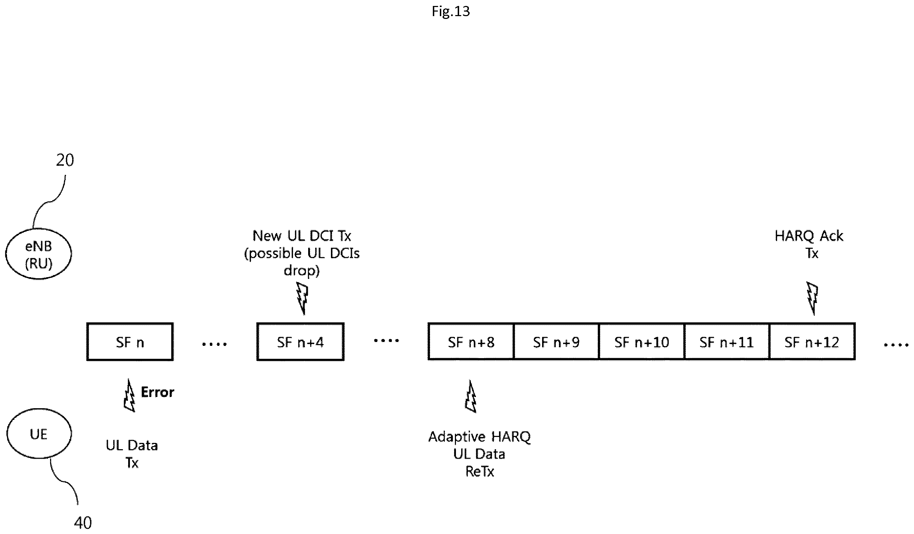

      - FIG. 13 is a timing diagram for a case where the above-described adaptive HARQ retransmission is performed.
   (12) When non-adaptive-HARQ=TRUE, Penalty U(n+k+k_1)>0, and all_1-adaptive-HARQ=TRUE or all_2-adaptive-HARQ=TRUE, one of resource allocations U(n+k+k_1), Alloc_1_min, Alloc_2_min having the smallest Penalty becomes new resource allocation Alloc_final.
      - When Alloc_final is U(n+k+k_1), the HARQ manager 21, 22 or 23 transmits an HARQ Nack response signal to the UE 40 in subframe SF n+k.
      - Otherwise, the HARQ manager 21, 22 or 23 generates a new UL DCI by using Alloc_final, and transmits the new UL DCIUE 40 in subframe SF n+k (in the case of FDD, n+4).
      - The NDI of the new UL DCI is set to non-toggling.
      - The number of RBs of new resource allocation Alloc_fianl may be equal to or larger than the number of RBs of U(n+k+k_1).
      - When the transmission of the UL DCIs of all the pieces of UE having an overlap of resources in connection with Alloc_final and the UL DCI of the corresponding UE are present, the transmission of UL DCIs including the above transmission is dropped, and the HARQ managers 21, 22 and 23 notify the BU 10 of the dropping. The BU 10 may take into account this information in the future uplink resource scheduling of the pieces of UE 40.
      - HARQ-ReTX-Schedule is set to TRUE. Furthermore, the corresponding UE 40 performs non-adaptive retransmission in the case of receiving only an HARQ Nack response signal and performs adaptive retransmission using an allocated uplink resource in the case of receiving an UL DCI, in subframe SF n+k+k_1 (in the case of FDD, k=K_1=4, n+8).
   (13) When non-adaptive-HARQ=TRUE, Penalty U(n+k+k_1)>0, all_1-adaptive-HARQ=FALSE and all_2-adaptive-HARQ=FALSE, the HARQ manager 21, 22 or 23 transmits an HARQ NACK response signal to the UE 40 in subframe SF n+k.
      - When the transmission of the UL DCIs of all the pieces of UE 40 having an overlap of resources in connection with U(n+k+k_1) and the UL DCI of the corresponding UE 40 are present, the transmission of UL DCIs including the above transmission is dropped, and the HARQ managers 21, 22 and 23 notify the BU 10 of the dropping. The BU 10 may take into account this information in the future uplink resource scheduling of the pieces of UE 40.
      - HARQ-ReTX-Schedule is set to TRUE. Furthermore, the corresponding UE 40 receives an HARQ Nack response signal, and performs non-adaptive HARQ retransmission in subframe SF n+k+k_1 (in the case of FDD, k=K_1=4, n+8).
   (14) A case where HARQ-ReTX-Schedule=FALSE corresponds to a case where resource allocation for the uplink HARQ retransmission of the corresponding UE 40 for which CRC is abnormal is impossible.
      - The HARQ manager 21, 22 or 23 transmits an HARQ Ack response signal to the UE 40 in subframe SF n+k (in the case of FDD, n+4).
      - The HARQ manager 21, 22 or 23 notifies the BU 10 that an HARQ Ack has been transmitted in the case where a CRC is abnormal.
      - When the BU 10 has normally received the corresponding uplink data from an RU of an S-group other than the HARQ manager 21, 22 or 23 of the corresponding UE 40, the BU 10 disregards the HARQ Ack transmission notification indicating that the CRC is abnormal transmitted from the HARQ manager 21, 22 or 23. Otherwise, the BU 10 performs new resource allocation so that the corresponding UE 40 can perform retransmission at a subsequent uplink HARQ retransmission point (in the case of FDD, SF n+16), and transfers the new resource allocation to the HARQ manager 21, 22 or 23. In this case, the NDI of a UL DCI is set to not-toggling.
      - The HARQ manager 21, 22 or 23 transmits the new resource allocation, received from the BU 10, to the UE 40 in subframe SF n+k+k_2 (in the case of FDD, k=4, k_2=8, n+12), i.e., a subsequent resource allocation point, thereby enabling the corresponding UE 40 to retransmit the corresponding data in subframe n+2*k_2 (in the case of FDD, n+16).

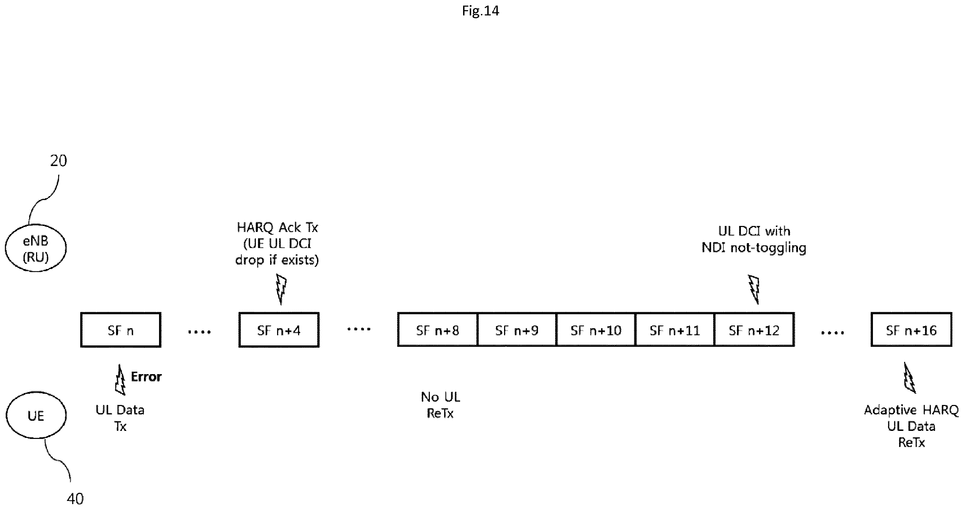

      - FIG. 14 is a timing diagram for a process of performing retransmission in subframe SF n+2*k_2 (in the case of FDD, k_2=8, n+16) because retransmission resources are not allocated in the above-described subframe SF n+k+k_1 (in the case of FDD, n+8).

While the present invention has been described with reference to the preferred embodiments thereof, it will be apparent that the present invention is not limited to the embodiments.

## Claims

1. A method of HARQ processing for uplink transmission in a distributed radio base station, the distributed radio base station including at least one base unit (BU) configured to process digital signals and one or more radio units (RUs) installed in one or more target service areas and configured to wirelessly communicate with one or more pieces of user equipment (UEs), the BU being coupled to each cell group, including a set of radio unit groups into each of which one or more RUs are grouped, over a transport network, the method comprising:
a first step of forming, by the BU, radio unit groups by grouping the RUs for the individual pieces of UE;
a second step of selecting, by the BU, one RU among the RUs belonging to a radio unit group for each of the pieces of UE, as an HARQ manager; and
a third step of transmitting, by the BU, an HARQ response to the UE via the RU which was selected as HARQ manager in the second step.

2. The method of claim 1, wherein the first step is **characterized in that**
when RUs have received the RA(random access) preamble from the UE during a random access process and have transmitted the RA preambles to the BU, the BU organizes the RUs having received the RA(random access) preamble from the UE into a radio unit group for the corresponding UE.

3. The method of claim 2, wherein the second step is **characterized in that** the BU selects the HARQ manager based on pieces of reception information of the RA preambles received from the respective RUs within the radio unit group.

4. The method of claim 3, further comprising, after the second step:
a step of transmitting, by the BU, a random access response message for random access of the UE to the HARQ manager, and transmitting, by the HARQ manager, the random access response message to the UE.

5. The method of claim 4, further comprising:
a step of transmitting, by the UE, uplink data to the RUs based on uplink resource allocation included in the received random access response message, and transmitting, by the RUs, the uplink data and uplink data reception information to the BU.

6. The method of claim 5, wherein the BU selects a new HARQ manager based on the received uplink data reception information.

7. The method of claim 6, wherein, when there is no RU for which an uplink data CRC included in the uplink data reception information is normal and when the strength of the received uplink signal of the RU having the highest strength is higher than the strength of the received signal from the existing HARQ manager by predetermined value, the BU selects the corresponding RU as new HARQ manager.

8. The method of claim 6, wherein, when there are RUs for each of which an uplink data CRC included in the uplink data reception information is normal and an uplink data CRC from the existing HARQ manager is not normal, an RU having a highest uplink received signal strength is selected as the new HARQ manager among the RUs for each of which an uplink data CRC is normal.

9. The method of claim 6, wherein, when there are RUs for each of which an uplink data CRC included in the uplink data reception information is normal, an uplink data CRC from the existing HARQ manager is normal, and an uplink received signal strength of an RU having a highest uplink received signal strength of all the RUs for each of which an uplink data CRC is normal is higher than an uplink received signal strength from the existing HARQ manager by a predetermined or larger value, the corresponding RU is selected as the new HARQ manager.

10. The method of claim 1, wherein the third step is **characterized in that**:
The RUs transmits an uplink data, received in subframe SF n to the BU, the BU transmits an HARQ response corresponding to the uplink data to the HARQ manager, and the HARQ manager transmits the HARQ response to the UE in subframe SF n+k.

11. The method of claim 10, wherein:
the BU transmits an HARQ Ack response signal to the HARQ manager when receiving uplink data for which a CRC is normal from at least one RU of the radio unit group; and
the BU transmits an HARQ Nack response signal to the HARQ manager when receiving uplink data for which a CRC is abnormal from all the RUs of the radio unit group.

12. The method of claim 1, wherein the third step comprises:
when it is determined that it is impossible for the BU to transmit an HARQ response to uplink data, received in subframe SF n by the RUs, to the UE via the HARQ manager in subframe SF n+k,
transmitting, by the HARQ manager, an HARQ Ack response signal to the UE in subframe SF n+k when a CRC for uplink data received from the UE in subframe SF n by the HARQ manager is normal.

13. The method of claim 1, wherein the third step comprises:
when it is determined that it is impossible for the BU to transmit an HARQ response to uplink data, received in subframe SF n by the RUs, to the UE via the HARQ manager in subframe SF n+k,
transmitting, by the HARQ manager, an HARQ Ack response signal to the UE regardless of whether a CRC for uplink data received from the RUs in subframe SF n by the HARQ manager is normal or not when the HARQ manager has received a signal indicating that the uplink data has been normally received via another RU from the BU.

14. The method of claim 1, wherein the third step comprises:
when it is determined that it is impossible for the BU to transmit an HARQ response to uplink data, received in subframe SF n by the RUs during a random access process, to the UE via the HARQ manager in subframe SF n+k, and a CRC for uplink data received by the HARQ manager is abnormal:
a step of transferring, by the BU, non-allocated resource set I(n+k+k_1) in subframe SF n+k+k_1 to the HARQ manager, and, upon uplink resource allocation, setting, by the BU, whether each uplink resource allocation is cancellable or not in a cancellation possibility field of a resource allocation information transfer message, and transferring, by the BU, the resource allocation information transfer message to the HARQ managers; and
a step of determining, by the HARQ managers, a set A(n+k+k_1) of cancellable uplink resource allocations of pieces of UE in subframe SF n+k+k_1 received from the BU.

15. The method of claim 14, further comprising a step of, when a set P(n) of resources (RBs) used for existing uplink data transmission in subframe SF n is all included in the non-allocated resource set I(n+k+k_1), requesting, by the HARQ manager, retransmission of uplink data in subframe SF n+k+k_1 by transmitting an HARQ Nack response signal to the UE in subframe SF n+k.

16. The method of claim 14, wherein, when a set P(n) of resources (RBs) used for existing uplink data transmission in subframe SF n is not all included in the non-allocated resource set I(n+k+k_1) but is all included in a union of the non-allocated resource set I(n+k+k_1) and the cancellable allocation resource set A(n+k+k_1), the HARQ manager requests retransmission of uplink data in subframe SF n+k+k_1 by transmitting an HARQ Nack response signal to the UE in subframe SF n+k.

17. The method of claim 16, wherein the HARQ manager drops UL DCI transmission of pieces of UE to which resources corresponding to P(n) have been allocated and notifies the BU of the dropping, and the BU takes into account the dropping in future uplink resource allocation of the corresponding pieces of UE.

18. The method of claim 14, wherein:
when the set P(n) of resources (RBs) used for existing uplink data transmission in subframe SF n is not all included in the union of the non-allocated resource set I(n+k+k_1) and the cancellable allocation resource set A(n+k+k_1):
the HARQ manager transmits an HARQ Ack response signal to the UE in subframe SF n+k, and notifies the BU that the HARQ Ack response signal has been transmitted;
the BU performs new resource allocation so that the UE retransmits Msg3 at a subsequent uplink HARQ retransmission point, and transfers the new resource allocation to the HARQ manager; and
the HARQ manager transmits the new resource allocation, received from the BU, to the UE in subframe SF n+k+k_2, which is the subsequent resource allocation point, thereby enabling the corresponding UE to retransmit uplink data in subframe n+2*k_2.

19. The method of claim 1, wherein the third step comprises:
when it is determined that it is impossible for the BU to transmit an HARQ response to uplink data, received in subframe SF n by the RUs during a random access process, to the UE via the HARQ manager in subframe SF n+k,
excluding resources used for existing uplink data transmission from resource allocation at a retransmission available point until uplink data is successfully transmitted, and requesting, by the HARQ manager, the UE to retransmit uplink data by using the excluded non-allocated resource when retransmission is required.

20. The method of claim 1, wherein the third step comprises:
when it is determined that it is impossible for the BU to transmit an HARQ response to uplink data, received in subframe SF n by the RUs, to the UE via the HARQ manager in subframe SF n+k, and a CRC for uplink data received by the HARQ manager is abnormal,
the HARQ manager requests retransmission using resources used for transmission whose reception has failed when the resources used for transmission whose reception has failed are included in a union of non-allocated resources, cancellable resources, and new transmission resources allocated to UE having transmitted data whose reception has failed.

21. The method of claim 20, wherein priorities of the resources to be used for the retransmission have a sequence of the non-allocated resources, the new transmission resources allocated to UE having transmitted data whose reception has failed, and the cancellable resources.

22. The method of claim 20, wherein non-adaptive HARQ retransmission is requested when resources to be used for retransmission are identical to the resources used for transmission whose reception has failed, and adaptive HARQ retransmission is requested when resources to be used for retransmission are not identical to the resources used for transmission whose reception has failed.

23. The method of claim 20, wherein the HARQ manager cancels the cancellable resource allocation to be used for retransmission or new resource allocation to the UE having failed in transmission, and notifies the BU of the cancellation, thereby enabling the BU to take into account the cancellation in future resource allocation.

24. The method of claim 1, wherein the third step comprises:
when it is determined that it is impossible for the BU to transmit an HARQ response to uplink data, received in subframe SF n by the RUs, to the UE via the HARQ manager in subframe SF n+k, a CRC for uplink data received by the HARQ manager is abnormal, and resources required for retransmission are not found, causing the UE to maintain data whose transmission has failed in an HARQ buffer by transmitting only an HARQ Ack response signal to the UE, and requesting, by the BU, adaptive HARQ retransmission by allocating resources at a subsequent retransmission point.

25. The method of claim 1, wherein the third step comprises:
when it is determined that it is impossible for the BU to transmit an HARQ response to uplink data, received in subframe SF n by the RUs, to the UE via the HARQ manager in subframe SF n+k,
scheduling, by BU, uplink resource allocation for subframe SF n+k and subframe SF n+k_2 on an assumption that reception of uplink data in subframe SF n is successful.
